# EUROPÄISCHE PATENTSCHRIFT

(11) **EP 0 648 944 B1**
(45) Veröffentlichungstag und Bekanntmachung des Hinweises auf die Patenterteilung: **26.11.1997**
(21) Anmeldenummer: 94114447.9
(22) Anmeldetag: 14.09.1994
(51) Int. Cl.: F16B 5/06

(54) **Verbindungselement aus Kunststoff**
Plastic connecting device
Elément de fixation en matière plastique

(30) Priorität: 13.10.1993 DE 4334926
(43) Veröffentlichungstag der Anmeldung: 19.04.1995
(60) Teilanmeldung: 96117514.8
(73) Patentinhaber: TRW United-Carr GmbH & Co. KG, D-67677 Enkenbach-Alsenborn (DE)
(72) Erfinder: Bockenheimer, Alexander, D-67307 Göllheim (DE); Kraus, Willibald, D-67269 FGrünstadt (DE)
(74) Vertreter: Eder, Thomas, Dr.-Ing.

(56) Entgegenhaltungen:
- EP-A- 0 641 939
- DE-A- 3 842 850
- DE-A- 3 903 124
- DE-A- 3 933 305
- DE-C- 4 014 589
- US-A- 4 505 611

## Beschreibung

Die Erfindung bezieht sich auf ein Verbindungselement aus Kunststoff mit einem ein Teil halternden Haltebereich und einem mit einem Träger, insbesondere einer Kraftfahrzeug-Karosserie, zu verbindenden Befestigungsbereich, wobei zwischen dem Teil und dem Träger ein Toleranzausgleich vorgesehen ist, nach dem Oberbegriff des Ansprüchs 1.

Ein Verbindungselement, von dem die vorliegende Erfindung ausgeht (US-A-4 505 611) weist zwei einander gegenuberliegende mehrfach abgeknickfe elastische Arme zwischen dem Halte bereich und dem Befestigungsbereich auf.

Als Stand der Technik ist weiterhin ein Verbindungselement bekannt, bei welchem zwischen dem Haltebereich und dem Befestigungsbereich ein Zwischenelement für einen Höhenausgleich vorgesehen ist (DE 39 33 305 C2). Hierdurch ist ein Toleranzausgleich in vertikaler Richtung möglich. Für einen Toleranzausgleich im Bereich der Trägerebene ist dieses bekannte Verbindungselement nicht geeignet.

Weiterer Stand der Technik ist eine Verbindung zwischen einem Träger und einem Plattenelement, bei welchem zwischen einem am Plattenelement befestigbaren Oberteil und einem Halteelement ein Mittelteil angeordnet ist (DE 4014 589 C1). Hierdurch wird zwischen dem Halteelement und einer Öffnung des Trägers ein Toleranzausgleich erzielt, wobei diese bekannte Verbindung jedoch aus mehreren Teilen besteht.

Ein anderes bekanntes Verbindungselement ist als Grundplatte aus Kunststoff ausgebildet, welche ein Kupplungselement zur Verbindung mit einer Befestigungsvorrichtung aufweist, wobei diese Grundplatte über ein Klebemittel an einem Träger zu verkleben ist (DE 39 03 124 A1). Bei dieser bekannten Vorrichtung ist keinerlei Toleranzausgleich vorgesehen oder angestrebt.

Demgegenüber liegt der vorliegenden Erfindung die Aufgabe zugrunde, ein Verbindungselement der eingangs genannten Art zu schaffen, welches bei einfachem Aufbau einen guten Toleranzausgleich in den in der Trägerebene liegenden Richtungen gewährleistet.

Diese Aufgabe wird erfindungsgemäß mit den Merkmalen des Anspruchs 1 gelöst. Durch diese elastischen Arme wird im zusammenwirken mit der jeweiligen Konstruktion auf einfache Weise ein guter Toleranzausgleich in den in der Trägerebene liegenden Richtungen erzielt.

Gemäß der Erfindung sind am Innenumfang des Befestigungsbereichs mehrere elastische Arme angeformt, deren vorderen Enden mit dem Haltebereich verbunden sind. Diese drei elastischen Arme bewirken in der Trägerebene sowohl in X- als auch in Y-Richtung und in dazwischen liegenden Bereichen einen sehr guten Toleranzausgleich in dieser Ebene.

Der Befestigungsbereich kann an dem Träger angeschweißt, angeklebt oder eingeklippt sein.

Vorteilhafte Weiterbildungen ergeben sich aus den Unteransprüchen.

Die Erfindung wird nachfolgend anhand eines in der Zeichnung dargestellten Ausführungsbeispiels näher beschrieben.

In der Zeichnung zeigen:
Fig. 1 eine gestaltung der Erfindung in Seitenansicht;
Fig. 2 eine perspektivische Ansicht des Verbindungselements nach Fig. 1;
Fig. 3 einen Schnitt nach der Linie VI-VI in Fig. 4;
Fig. 4 eine Draufsicht auf das Verbindungselement nach Fig. 1.

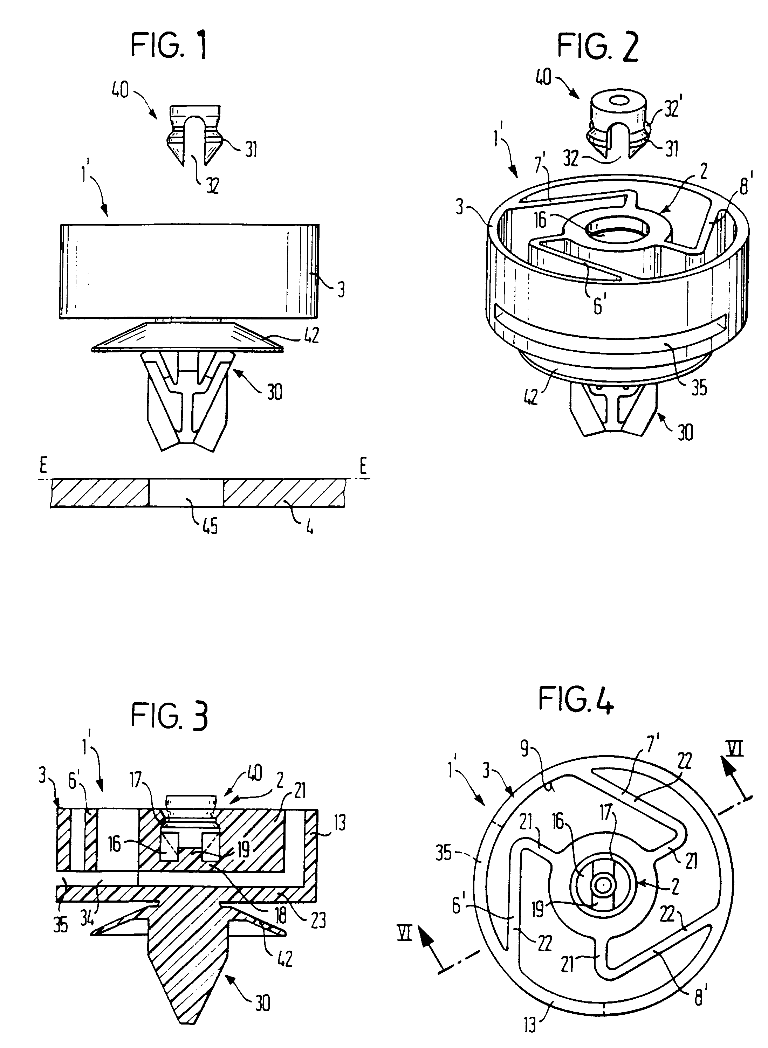

In Fig. 1 ist ein Verbindungselement 1' aus Kunststoff in einer Ausführungsform dargestellt, welches mit einem Träger 4 verbunden werden kann. Hierzu weist das Verbindungselement 1' z.B. ein Einkippteil 30 auf, das in eine Öffnung 45 des Trägers 4 einsetzbar, d.h. einklippbar ist. Nach Befestigung des Verbindungselements in der Öffnung 45 des Trägers 4, d.h. beispielsweise einer Kraftfahrzeugkarosserie, läßt sich ein schematisch dargestelltes, mit einem anderen Teil verbundenes Halteelement 40 in das Verbindungselement 1 einsetzen.

Es bestehen auch die nicht näher dargestellten Möglichkeiten, daß der Befestigungsbereich 3 an dem Träger 4 augeschweißt oder augeklebt ist.

Aus Fig. 2, 3 und 4 geht hervor, daß das Verbindungselement 1' einen Haltebereich 2 für das Halteelement 40 aufweist. Der Haltebereich 2 dieses einstückig ausgebildeten Verbindungselements 1' ist über drei abgewinkelte, elastische Arme 6', 7', 8' mit dem Befestigungsbereich 3 verbunden, welcher unterseitig das Einklippteil 30 aufweist.

Es ist ersichtlich, daß der Befestigungsbereich 3 und der Haltebereich 2 jeweils zylindermantelförmig ausgebildet sind. Die drei, gleichmäßig über den Umfang der Zylindermäntel verteilten Arme 6', 7', 8' verbinden hierbei den Haltebereich 2 mit dem Befestigungsbereich 3.

Weiterhin ist erkennbar, daß jeder abgewinkelte Arm 6', 7', 8' bezüglich des Zylindermantels des Haltebereichs 2 einen radialen Bereich 21 und einen spitzwinklig dazu verlaufenden, an den Innenumfang 9 des Befestigungsbereichs 3 anschließenden Anschlußbereich 22 aufweist. Der radiale Bereich 21 der Arme 6', 7', 8' kann hierbei jeweils kürzer sein als der Anschlußbereich 22.

Wird das erfindungsgemäße Verbindungselement 1' in die Öffnung 45 des Trägers 4 eingesetzt, so verklippt das Einklippteil 30 in der Trägeröffnung. Bei in den Haltebereich 2 eingesetztem Halteelement 40 kann dieses nun mit den daran angeordneten, nicht näher dargestellten Elementen infolge der abgewinkelten Arme 6', 7', 8' in allen, parallel zur Trägerebene E-E liegenden Richtungen um einen bestimmten Betrag verschoben werden bzw. versetzt sein, so daß hierdurch ein guter Toleranzausgleich erzielt wird.

Der Befestigungsbereich 3 weist nach Fig. 3 eine parallel zur Trägerebene (E-E) verlaufende Bodenplatte 23 auf, an welcher unterseitig das Einklippteil 30 angeordnet ist. Aus Fig. 2 und 3 ist erkennbar, daß sich im Befestigungsbereich 3 zwischen der Bodenplatte 23 und dem Haltebereich 2 mit den Armen 6', 7', 8' eine parallel zur Trägerebene E-E verlaufende Einarbeitung 34 befindet.

Diese Einarbeitung 34 durchdringt über einen Schlitz 35 den Außenumfang des Befestigungsbereichs 3. Aus Fig. 2 geht hervor, daß die Durchdringung etwa einen Bereich zwischen 90° und 120° des Außenumfangs des Befestigungsbereichs 3 umfaßt.

Diese Einarbeitung mit der Durchdringung erleichtert die Herstellung des erfindungsgemäßen Verbindungselements 1', wobei außerdem die Elastizität der drei abgewinkelten Arme 6', 7', 8' verbessert wird, da diese lediglich in ihren Endbereichen einerseits mit dem Innenumfang 9 des Befestigungsbereichs 3 und andererseits mit dem Außenumfang des Haltebereichs 2 verbunden sind.

Bei dem dargestellten Ausführungsbeispiel ist das Einklippteil 30 als Zapfen mit federnden Eingriffselementen ausgebildet. In nicht näher dargestellter Ausführungsform besteht auch die Möglichkeit, statt des Einklippteils z.B. einen Profilbolzen oder einen Zylindermantel mit am Innenumfang angeordneten Eingriffselementen vorzusehen.

Ist in dem Träger 4 eine Bohrung 45 zur Aufnahme des Einklippteils 30 vorgesehen, so kann zwischen der Bodenplatte 23 des Befestigungsbereichs 3 und dem Einklippteil 30 eine umlaufende, elastische Dichtlippe 42 angeordnet sein, welche die Öffnung 45 des Trägers 4 im montierten Zustand des erfindungsgemäßen Verbindungselements 1' überdeckt und damit eine Abdichtung herstellt. Auch bei anderen Halterungsmöglichkeiten ist der Einsatz dieser Dichtlippe 42 denkbar.

Der Haltebereich 2 weist bei diesem Ausführungsbeispiel nach Fig. 3 und 4 eine zylinderförmige Öffnung 16 mit einer umlaufenden Schulter 17 im oberen Bereich auf. Weiterhin ist die Öffnung 16 durch einen Boden 18 abgeschlossen. Der Boden 18 kann mit einer sich radial durch die Öffnung 16 erstreckenden Fixierrippe 19 versehen sein.

Wird nun ein Halteelement 40 mit seiner Aussparung 32 und seinen Schultern 31 in den Haltebereich 2 des erfindungsgemäßen Verbindungselements 1' eingesetzt, so erfolgt ein Verklippen gemäß der Montagedarstellung nach Fig. 3, d.h. die Schultern 31 des Halteelements 40 rasten hinter der Schulter 17 des Haltebereichs 2. Die Fixierrippe 19 liegt in der Aussparung 32 des Halteelements 40, so daß hierdurch eine einwandfreie Fixierung des Halteelements 40 gegeben ist und dieses sich nicht in unerwünschter Weise drehen kann.

Es besteht nach Fig. 2 auch die Möglichkeit, daß das Halteelement 40 noch eine Queraussparung 32' aufweist, so daß ein um 90° verdrehtes Einsetzen in den Haltebereich 2 möglich und die Queraussparung 32' in der Fixierrippe 19 verriegelt ist.

Statt einer Fixierrippe kann auch ein anderes Fixierelement am Boden oder an den Seitenwänden der Öffnung 16 angeordnet sein, welches mit einem entsprechenden Gegenstück am Halteelement 40 zusammenwirkt; hierdurch kann ein bezüglich der Längsachse des Verbindungselements 1' winklig verdrehtes Einsetzen des Halteelements 40 in den Haltebereich 2 erfolgen. Es kann auch auf ein Fixierelement verzichtet werden, so daß sich das Halteelement 40 um seine Längsachse drehen kann.

Durch die abgewinkelten Arme 6', 7', 8' wird in jedem Fall zwischen dem Haltebereich 2 und dem Befestigungsbereich 3 ein sehr guter Toleranzausgleich in allen, parallel zur Trägerebene E-E liegenden Richtungen erzielt.

## Patentansprüche

1. Verbindungselement aus Kunststoff mit einem ein Teil halternden Haltebereich (2) und einem mit einem Träger (4), insbesondere einer Kraftfahrzeug-Karosserie, zu verbindenden Befestigungsbereich (3), wobei zwischen dem Teil (5) und dem Träger (4) ein Toleranzausgleich vorgesehen ist und wobei der Haltebereich (2) und der Befestigungsbereich (3) durch mindestens zwei elastische Arme (6', 7', 8') zum Toleranzausgleich in den in der Trägerebene (E-E) liegenden Richtungen verbunden sind,
dadurch gekennzeichnet,
daß der Haltebereich (2) des einstückig ausgebildeten Verbindungselements (1') über mehrere, parallel zur Trägerebene (E-E) verlaufende, abgewinkelte, elastische Arme (6', 7', 8') mit dem ein Einklippteil (30) oder ein einen Profilbolzen lagernden Befestigungsbereich (3) verbunden ist,
daß der Befestigungsbereich (3) und der Haltebereich (2) jeweils zylindermantelförmig ausgebildet ist, wobei drei, gleichmäßig über den Umfang verteilte Arme (6', 7', 8') den Haltebereich (2) und den Befestigungsbereich (3) verbinden und
daß jeder abgewinkelte Arm (6', 7', 8') bezüglich des Zylindermantels (13) einen radialen Bereich (21) und einen spitzwinklig dazu verlaufenden, an den Innenumfang des Befestigungsbereichs (3) anschließenden Anschlußbereich aufweist.

2. Verbindungselement nach Anspruch 1, dadurch gekennzeichnet, daß der radiale Bereich (21) der Arme (6', 7', 8') jeweils kürzer als der Anschlußbereich (22) ist.

3. Verbindungselement nach einem der vorhergehenden Ansprüche, dadurch gekennzeichnet, daß der Befestigungsbereich (3) eine achsparallel zur Trägerebene (E-E) verlaufende Bodenplatte (23) aufweist, an welcher unterseitig der Einklippteil (30) oder ein Profilbolzen angeordnet ist.

4. Verbindungselement nach Anspruch 3, dadurch gekennzeichnet, daß sich im Befestigungsbereich (3) zwischen der Bodenplatte (23) und dem Haltebereich (2) mit den Armen (6', 7', 8') eine parallel zur Trägerebene (E-E) verlaufende Einarbeitung (34) befindet.

5. Verbindungselement nach Anspruch 4, dadurch gekennzeichnet, daß die Einarbeitung (34) über einen Schlitz (35) den Außenumfang des Befestigungsbereichs (3) durchdringt.

6. Verbindungselement nach Anspruch 5, dadurch gekennzeichnet, daß die Durchdringung einen Bereich zwischen 90° und 120° des Außenumfangs des Befestigungsbereichs (3) umfaßt.

7. Verbindungselement nach einem der vorhergehenden Ansprüche, dadurch gekennzeichnet, daß der Haltebereich (2) eine zylinderförmige Öffnung (16) mit einer umlaufenden Schulter (17) im oberen Bereich aufweist.

8. Verbindungselement nach Anspruch 7, dadurch gekennzeichnet, daß die Öffnung (16) durch einen Boden (18) abgeschlossen ist.

9. Verbindungselement nach Anspruch 8, dadurch gekennzeichnet, daß die Öffnung (16) und/oder der Boden (18) mit mindestens einem mit einem Halteelement (40) zusammenwirkenden Fixierelement versehen ist.

10. Verbindungselement nach Anspruch 8, dadurch gekennzeichnet, daß der Boden (18) als Fixierelement eine sich radial durch die Öffnung (16) erstreckende Fixierrippe (19) für das Halteelement (40) aufweist.

11. Verbindungselement nach einem der vorhergehenden Ansprüche, dadurch gekennzeichnet, daß unterhalb der Bodenplatte (23) eine umlaufende, elastische Dichtlippe (42) angeordnet ist.

## Claims

1. Plastic connecting element having a retaining region (2), which secures a part, and a fastening region (3), which can be connected to a carrier (4), in particular a motor-vehicle body, tolerance compensation being provided between the part (5) and the carrier (4), and the retaining region (2) and the fastening region (3) being connected by at least two elastic arms (6', 7', 8') for the purpose of tolerance compensation in the directions located in the carrier plane (E-E), characterized in that the retaining region (2) of the single-piece connecting element (1') is connected to the fastening region (3), which supports a clip-in part (30) or a profile bolt, via a plurality of angled, elastic arms (6', 7', 8') which run parallel to the carrier plane (E-E), in that the fastening region (3) and the retaining region (2) are each designed in the form of a lateral surface of a cylinder, three arms (6', 7', 8'), which are distributed uniformly over the circumference, connecting the retaining region (2) and the fastening region (3), and in that, with respect to the lateral surface of the cylinder (13), each angled arm (6', 7', 8') has a radial region (21) and a connection region which runs at an acute angle with respect to said radial region and adjoins the inner circumference of the fastening region (3).

2. Connecting element according to Claim 1, characterized in that the radial region (21) of the arms (6', 7', 8') is shorter in each case than the connection region (22).

3. Connecting element according to one of the preceding claims, characterized in that the fastening region (3) has a base plate (23) which is axis-parallel to the carrier plane (E-E) and on the underside of which the clip-in part (30) or a profile bolt is arranged.

4. Connecting element according to Claim 3, characterized in that a recess (34), which runs parallel to the carrier plane (E-E), is located in the fastening region (3), between the base plate (23) and the retaining region (2) with the arms (6', 7', 8').

5. Connecting element according to Claim 4, characterized in that the recess (34) penetrates the outer circumference of the fastening region (3) via a slit (35).

6. Connecting element according to Claim 5, characterized in that the penetration covers a region of between 90° and 120° of the outer circumference of the fastening region (3).

7. Connecting element according to one of the preceding claims, characterized in that the retaining region (2) has a cylindrical opening (16) with a shoulder (17) running all the way around in the top region.

8. Connecting element according to Claim 7, characterized in that the opening (16) is closed off by a base (18).

9. Connecting element according to Claim 8, characterized in that the opening (16) and/or the base (18) are/is provided with at least one fixing element which interacts with a retaining element (40).

10. Connecting element according to Claim 8, characterized in that, as fixing element, the base (18) has a fixing rib (19), which extends radially through the opening (16), for the retaining element (40).

11. Connecting element according to one of the preceding claims, characterized in that a circular, elastic sealing lip (42) is arranged beneath the base plate (23).

## Revendications

1. Elément de liaison en matière plastique comprenant une zone de retenue (2) retenant une pièce et une zone de fixation (3) devant être reliée à un support (4), notamment une carrosserie de véhicule automobile, une compensation de tolérances étant prévue entre la pièce (5) et le support (4), et la zone de retenue (2) et la zone de fixation (3) étant solidarisées par au moins deux bras élastiques (6', 7', 8'), en vue de la compensation de tolérances dans les directions situées dans le plan (E-E) du support,
caractérisé par le fait
que la zone de retenue (2) de l'élément de liaison (1') réalisé d'un seul tenant est reliée, par l'intermédiaire de plusieurs bras élastiques coudés (6', 7', 8') s'étendant parallèlement au plan (E-E) du support, à la zone de fixation (3) assurant le montage d'une partie encliquetable (30) ou d'un tenon profilé,
que la zone de fixation (3) et la zone de retenue (2) sont respectivement réalisées en forme d'enveloppes cylindriques, trois bras (6', 7', 8'), uniformément répartis sur le pourtour, reliant la zone de retenue (2) et la zone de fixation (3), et
que chaque bras coudé (6', 7', 8') présente, par rapport à l'enveloppe cylindrique (13), une région radiale (21) et une région de raccordement s'étendant à angle aigu vis-à-vis de cette dernière, et se rattachant au pourtour intérieur de la zone de fixation (3).

2. Elément de liaison selon la revendication 1, caractérisé par le fait que la région radiale (21) des bras (6', 7', 8') est à chaque fois plus courte que la région de raccordement (22).

3. Elément de liaison selon l'une des revendications précédentes, caractérisé par le fait que la zone de fixation (3) comporte un disque de fond (23) dont l'axe s'étend parallèlement au plan (E-E) du support, et à la face inférieure duquel se trouve la partie encliquetable (30) ou un tenon profilé.

4. Elément de liaison selon la revendication 3, caractérisé par le fait qu'une dépouille (34) s'étendant parallèlement au plan (E-E) du support est pratiquée dans la zone de fixation (3), entre le disque de fond (23) et la zone de retenue (2) munie des bras (6', 7', 8').

5. Elément de liaison selon la revendication 4, caractérisé par le fait que la dépouille (34) traverse le pourtour extérieur de la zone de fixation (3) par l'intermédiaire d'une fente (35).

6. Elément de liaison selon la revendication 5, caractérisé par le fait que la région traversante englobe une plage représentant entre 90° et 120° du pourtour extérieur de la zone de fixation (3).

7. Elément de liaison selon l'une des revendications précédentes, caractérisé par le fait que la zone de retenue (2) présente un orifice cylindrique (16) comportant un épaulement circonférentiel (17) dans la région supérieure.

8. Elément de liaison selon la revendication 7, caractérisé par le fait que l'orifice (16) est obturé par un fond (18).

9. Elément de liaison selon la revendication 8, caractérisé par le fait que l'orifice (16) et/ou le fond (18) est pourvu d'au moins un élément de consignation à demeure, coopérant avec un élément de retenue (40).

10. Elément de liaison selon la revendication 8, caractérisé par le fait que le fond (18) présente, en tant qu'élément de consignation à demeure, une nervure d'assujettissement (19) destinée à l'élément de retenue (40) et s'étendant radialement à travers l'orifice (16).

11. Elément de liaison selon l'une des revendications précédentes, caractérisé par le fait qu'une lèvre élastique périphérique d'étanchement (42) est disposée au-dessous du disque de fond (23).
